# EUROPEAN PATENT APPLICATION

(11) **EP 1 237 330 A2**
(43) Date of publication of application: **04.09.2002**
(21) Application number: 01118178.1
(22) Date of filing: 26.07.2001
(51) Int. Cl.: H04L 12/26, H04L 12/24

(54) **Network monitoring apparatus, a network monitoring program, a network monitoring method and a computer network system**

(30) Priority: 01.03.2001 JP 2001056747
(71) Applicant: Allied Telesis Kabushiki Kaisha, Shinagawa-ku, Tokyo 141-8635 (JP)
(72) Inventor: Sato, Takayuki, c/oAllied Telesis K.K., Tokyo (JP)
(74) Representative: Grünecker, Kinkeldey, Stockmair & Schwanhäusser Anwaltssozietät

(57) **Abstract**

A network monitoring apparatus for displaying a state of a network and monitoring the network, includes: a setting unit operable to set a display condition that defines information to be displayed; a receiving unit operable to receive information of the network; a comparing unit operable to compare the received information with the display condition; and a display unit operable to display the information of the network based on the result of the comparison by the comparing unit.

## Description

### BACKGROUND OF THE INVENTION

### 1. Field of the Invention

The present invention relates to a network monitoring apparatus, a network monitoring program, a network monitoring method and a computer network system. In particular, the present invention relates to a network monitoring apparatus, a network monitoring program, a network monitoring method and a computer system for displaying a state of a network based on a condition set by a network administrator.

### 2. Description of the Related Art

As a management system for a network that monitors a current state of network-communication devices, a network remote management system is disclosed in Japanese Patent Application Laying-Open No. 11-31114, published on February 2, 1999, which displays images corresponding to the respective network communication devices by using GUI (Graphical User Interface) and monitors the network communication devices displayed on a network monitoring apparatus. Moreover, Japanese Patent Application Laying-Open No. 11-161587, published on June 18, 1999, discloses an application for managing devices connected to a network in which a state such as a communicatable state or a non-communicatable state is indicated by turning on/off images of LEDs of the devices to be monitored in the GUI, as well as LEDs of connection ports of interconnecting units such as a switching hub or a router.

In recent years, however, functions of the interconnecting units have been increased and therefore the number of states of the connection ports tends also to be increased. Thus, it becomes hard to indicate the states to be monitored by the network administrator by only changing the LED images in the GUI. In addition, with the increase in the number of the states to be monitored, the amount of information received by the network monitoring apparatus from the devices to be monitored has increased, thereby putting the network under stress.

### SUMMARY OF THE INVENTION

Therefore, it is an object of the present invention to provide a network monitoring apparatus, a network monitoring program, a network monitoring method and a computer network, which is capable of overcoming the above drawbacks accompanying the conventional art. The above and other objects can be achieved by combinations described in the independent claims. The dependent claims define further advantageous and exemplary combinations of the present invention.

According to the first aspect of the present invention, a network monitoring apparatus for displaying a state of a network and monitoring the network, comprising: a receiving unit operable to receive the information of the network; and a display unit operable to display the information of the network, characterized in that the network monitoring apparatus further comprises: a setting unit operable to set a display condition that defines the information to be displayed; a comparing unit operable to compare the received information with the display condition; and wherein the display unit displays the information of the network based on a result of the comparison by the comparing unit.

The setting unit may further set a receiving condition that defines information to be received, while the receiving unit receives the information of the network based on the receiving condition.

The setting unit may further set an indication image corresponding to the display condition, while the display unit displays the information of the network based on the indication image.

The receiving unit may receive a communication state of an interconnecting unit that interconnects communication devices in the network from the interconnecting unit. In this case, the comparing unit compares the communication state of the interconnecting unit with the display condition, and the display unit displays the communication state of the interconnecting unit based on the comparison result.

The interconnecting unit may include a plurality of connection ports. In this case, the receiving unit receives communication states of the connection ports from the interconnecting unit as the information of the network, the comparing unit compares the communication states of the connection ports with the display condition, and the display unit displays the communication states of the connection ports based on the comparison result.

The receiving unit may receive the amount of communication at a connection port of the interconnecting unit from the interconnecting unit as the information of the network. In this case, the comparing unit compares the communication amount at the connection port with the display condition, and the display unit displays a communication state of the network based on the comparison result.

According to the second aspect of the present invention, a network monitoring program for allowing a state of a network to be displayed and allowing the network to be monitored, comprising: a receiving module operable to receive information of the network; and a display module operable to display the information of the network. The network monitoring program further comprises: a setting module operable to set a display condition that defines information to be displayed; a comparing module operable to compare the information received with the display condition. In the network monitoring program, the display module displays the information of the network based on a result of the comparison by the comparing module.

The setting module may further set a receiving condition that defines information to be received, while the receiving module receives the information of the network based on the receiving condition.

The setting module may further set an indication image corresponding to the display condition, while the display module displays the information of the network based on the indication image.

The receiving module may receive a communication state of an interconnecting unit for interconnecting communication devices in the network. In this case, the comparing module compares the communication state of the interconnecting unit with the display condition, and the display module displays the communication state of the interconnecting unit based on the comparison result.

The interconnecting unit includes a plurality of connection ports. In this case, the receiving modules receives communication states of the connection ports as the information of the network, the comparing module compares the communication states of the connect ion ports with the display condition, and the display module displays the communication states of the connection ports based on the comparison result.

The receiving module may receive the amount of communication at a connection port of the interconnecting unit from the interconnecting unit as the information of the network. In this case, the comparing module compares the communication amount at the connection port with the display condition, and the display module displays a communication state of the network based on the comparison result.

According to the third aspect of the present invention, a network monitoring method for displaying a state of a network and monitoring the network, comprising: receiving information of the network; and displaying the information of the network. The network monitoring method further comprises: setting a display condition that defines information to be displayed; comparing the received information of the network with the display condition. In the network monitoring method, the displaying displays the information of the network based on a result of the comparison.

In the setting, a receiving condition that defines information to be received may be further set. In this case, in the receiving, the information of the network is received based on the receiving condition.

In the setting an indication image may be further set to correspond to the display condition. In this case, in the displaying, the information of the network is displayed based on the indication image.

According to the fourth aspect of the present invention, a computer network system comprising: a network monitoring apparatus operable to display a state of a network and to monitor the network; and a network communication device operable to notify the network monitoring apparatus of the state of the network, the network monitoring apparatus including: a receiving unit operable to receive information of the network from the network communication device; and a display unit operable to display the information of the network. In the computer network system, the network monitoring apparatus further includes: a setting unit operable to set a display condition that defines information to be displayed; a comparing unit operable to compare the received information with the display condition. In the computer network system, the display unit displays the information of the network based on a result of the comparison by the comparing unit.

The setting unit may further set a receiving condition that defines information to be received, while the receiving unit receives the information of the network based on the receiving condition.

The setting unit may further set an indication image corresponding to the display condition, while the display unit displays the information of the network based on the indication image.

The network communication device may be an interconnecting unit for interconnecting communication devices in the network. In this case, the receiving unit receives a communication state of the interconnecting unit from the interconnecting unit, the comparing unit compares the communication state of the interconnecting unit with the display condition, and the display unit displays the communication state of the interconnecting unit based on the comparison result.

The interconnecting unit may include a plurality of connection ports. In this case, the receiving unit receives communication states of the connectionports of the interconnecting unit, the comparing unit compares the communication states of the connection ports with the display condition, and the display unit displays the communication states of the connection ports based on the comparison result.

The receiving unit receives the amount of communication at a connection port of the interconnecting unit from the interconnecting unit. In this case, the comparing unit compares the communication amount at the connection port with the display condition, and the display unit displays a communication state of the network based on the comparison result.

The summary of the invention does not necessarily describe all necessary features of the present invention. The present invention may also be a sub-combination of the features described above. The above and other features and advantages of the present invention will become more apparent from the following description of the embodiments taken in conjunction with the accompanying drawings.

### BRIEF DESCRIPTION OF THE DRAWINGS

Fig. 1 schematically shows a computer network system according to an embodiment of the present invention.
Fig. 2 shows an exemplary arrangement of a network monitoring apparatus 10.
Fig. 3 shows an exemplary display created by a display unit 110 for allowing the setting by a network administrator.
Fig. 4 shows an exemplary display created by the display unit 110 for showing states.
Fig. 5 is a flowchart of a network monitoring method according to an embodiment of the present invention.
Fig. 6 shows another exemplary display created by the display unit 110 for showing the states.
Fig. 7 shows an exemplary hardware configuration of the network monitoring apparatus 10.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

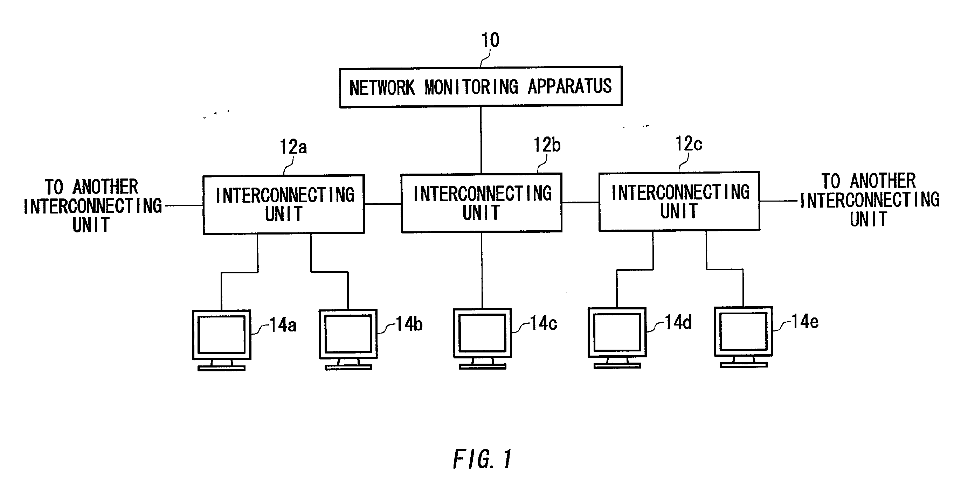

Fig. 1 schematically shows an arrangement of a computer network system according to an embodiment of the present invention. The computer network system according to the present embodiment includes a network monitoring apparatus 10 that can display a state of each network communication device connected to a network, interconnecting units 12a, 12b and 12c for interconnecting devices included in the network, and personal computers 14a, 14b, 14c, 14d and 14e each of which is connected to one of the interconnecting units 12a, 12b and 12c.

Each of the interconnecting units 12a, 12b and 12c includes a plurality of connection ports. The network monitoring apparatus 10 displays, as the state of the network, communication states including information regarding the communication amount at each of the connection ports of the interconnecting units 12a, 12b and 12c, connection states including information of devices connected to the respective connection ports, and states of settings of the respective connection ports that include information regarding a load sharing group. The network monitoring apparatus 10 also monitors the network. The network monitoring apparatus 10, for example, monitors the communication states of the interconnecting units 12a, 12b and 12c as the network communication devices, and displays the communication states of the interconnecting units 12a, 12b and 12c by using GUI based on information received from the interconnecting units 12a, 12b and 12c.

The network monitoring apparatus 10 may monitor and display operation states of CD drives of the personal computers 14a, 14b, 14c, 14d and 14e, and operation states of an access unit, a load balancing device, a bandwidth management device, a media converter, an optical line terminal multiplexer and a power-supply management device, as the state of the network. Thus, the network administrator can manage the states in the network by using the images displayed on the network monitoring apparatus 10.

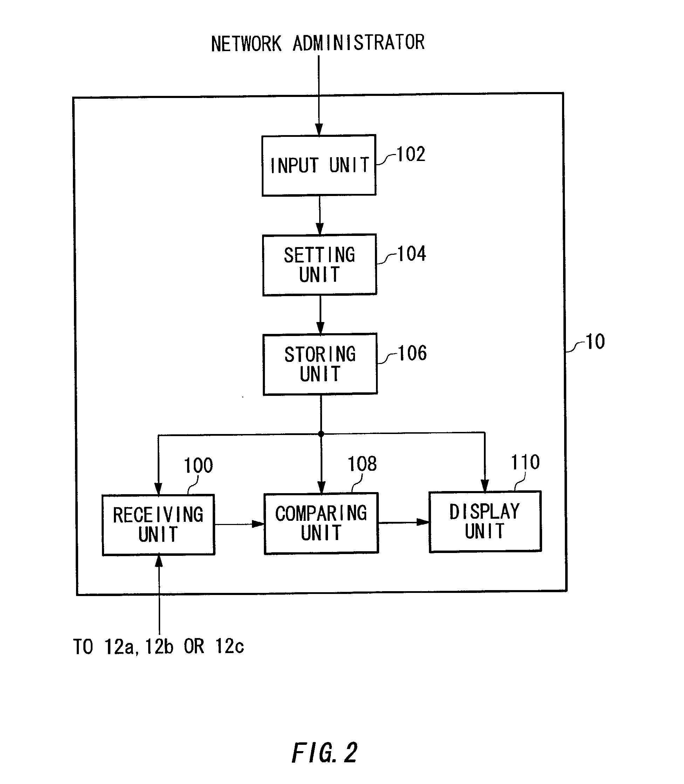

Fig. 2 schematically shows an arrangement of the network monitoring apparatus 10. The network monitoring apparatus 10 includes a receiving unit 100 that can receive information of the network from the network communication device, an input unit 102 that allows the network administrator to input a condition for managing the network, a setting unit 104 that can set the condition input via the input unit 102, a storing unit 106 that stores the condition set by the setting unit 104 therein, a comparing unit 108 that can compare the information received by the receiving unit 100 with the stored condition in the storing unit 106, and a display unit 110 that can display the information of the network based on the result of the comparison by the comparing unit 108.

The setting unit 104 sets the condition input by the network administrator through the input unit 102 in the network monitoring apparatus 10. More specifically, the setting unit 104 sets, for each of the connection ports of the interconnecting units 12a, 12b and 12c; a receiving condition that defines information to be received by the receiving unit 100 and a display condition that defines information to be displayed by the display unit 110. The set conditions are stored in the storing unit 106. In addition, the setting unit 104 allows the network administrator to set, for each of the connection ports of the interconnecting units 12a, 12b and 12c, indication images to be displayed corresponding to the receiving condition and the display condition and stores the indication images in the storing unit 106.

The receiving unit 100 receives the communication state of the connection port of the interconnecting unit 12a, 12b or 12c from the interconnecting unit 12a, 12b or 12c based on the receiving condition stored in the storing unit 106. The comparing unit 108 then compares the display condition stored in the storing unit 106 with the information received by the receiving unit 100, i.e., the communication state. Based on the result of the comparison, the display unit 110 displays the communication states of the interconnecting units 12a, 12b and 12c by using the indication images set by the network administrator. As described above, the network administrator can create the indication images corresponding to the receiving condition and the display condition and customize them, so that the network administrator can monitor the communication states of the interconnecting units 12a, 12b and 12c by using the indication images that are easily recognized.

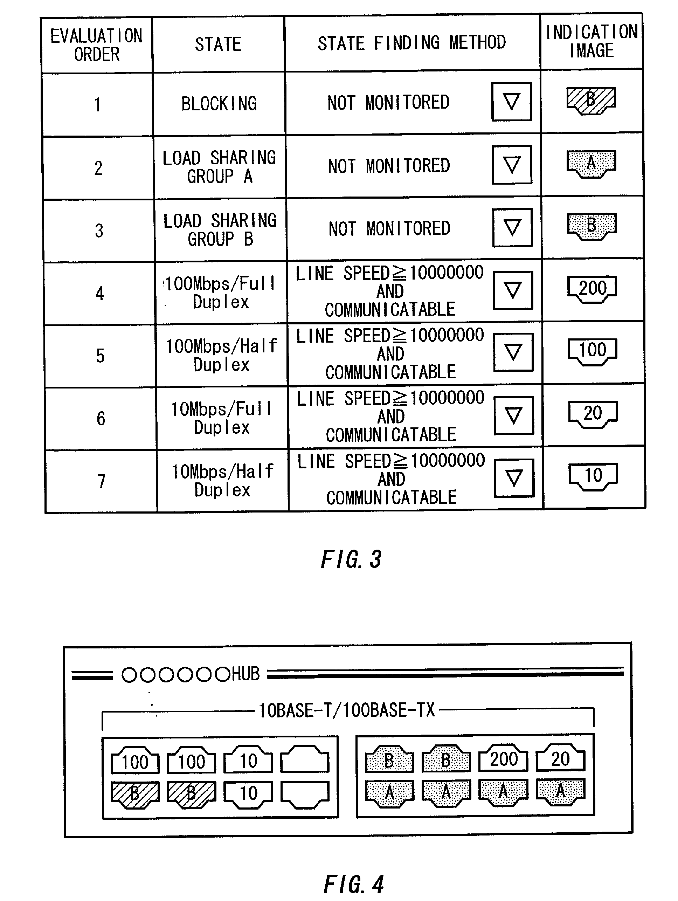

Fig. 3 shows an exemplary setting display created by the display unit 110 for allowing the network administrator to perform the setting. The displayunit 110 displays a state-representation table as the setting display for allowing the receiving condition, the display condition and the indication images to be set, as shown in Fig. 3. The state-representation table includes fields in which an evaluation order, a state, a method for finding the state, and an indication image are stored. The evaluation order indicates an order in which validation for the communication state of the interconnecting unit is performed. The network administrator can monitor the interconnecting units depending on his/her purpose of monitoring by changing the evaluation order . In the state field, the state of the connection port of the interconnecting unit is indicated. The state finding method indicates a condition of determination that defines the receiving condition defining the information to be received or the display condition defining the information to be displayed. The field of the indication image shows an indication image to be displayed by the display unit 110 in a case where a current state is the same as that indicated in the corresponding state field and the determination condition indicated in the field of the state finding method is satisfied. The state-representation table maybe provided for each connection port of the interconnecting unit. In this case, the storing unit 106 stores the state-representation tables in such a manner the state-representation tables correspond to the associated connection ports, respectively.

The state finding method is selected from "not monitored", "default", "predetermined", "customize", or the like, by using a pull-down menu. When "not monitored" is selected, the receiving unit 100 does not receive information indicating whether or not the interconnecting unit to be monitored is in the state indicated by the state field of the state-representation table from the interconnecting unit. When "default" is selected, a default condition is selected. When "predetermined" is selected, a predetermined determination condition is selected. The predetermined determination condition may be given a provider of the network monitoring apparatus 10. When "customize" is selected, the network administrator can create a desired determination condition. The network monitoring apparatus 10 may add a new state to be monitored by adding a state name of the new state in the state-representation table or delete an unnecessary state by deleting the corresponding state name. Moreover, the evaluation order may be changed by changing two or more rows of the state-representation table.

In the state finding method field, when "not monitored" is selected for the state that is not necessary for the network administrator, the amount of the information received by the network monitoring apparatus 10 can be reduced. Moreover, in a case where the determination condition is satisfied for the connection port to which the evaluation order of 1 is given, for example, the network monitoring apparatus 10 does not receive information regarding the states of the other connection ports to which the evaluation orders other than 1 are given. Thus, the amount of the information received by the network monitoring apparatus 10 can be reduced, resulting in great reduction of the communication amount in the network. In addition, the network administrator can create the indication image that is easily recognized by the network administrator, by using desired characters or colors. The indication image may be animation using a moving picture. In an alternative embodiment, the network monitoring apparatus 10 may notify the network administrator of the state of the network by means of e-mail, a pager, a cellular phone, or the like.

Fig. 4 shows an exemplary display for showing the states that are created by the display unit 110. The display unit 110 displays an image that represents the interconnecting unit to be monitored and also displays the indication images (shown in Fig. 3) set by the network administrator at portions of the respective connection ports of the interconnecting unit based on the result of the comparison by the comparing unit 108. In this example, at the portion of the connection port having the state where the determination condition set in the state-representation table is not satisfied, an indication image indicating that the determination condition is not satisfied is displayed. As described above, since the display unit 110 displays the communication states of the interconnecting units based on the displaying condition and the indication images that are customized by the network administrator, the network administrator can find the communication states of the interconnecting units easily.

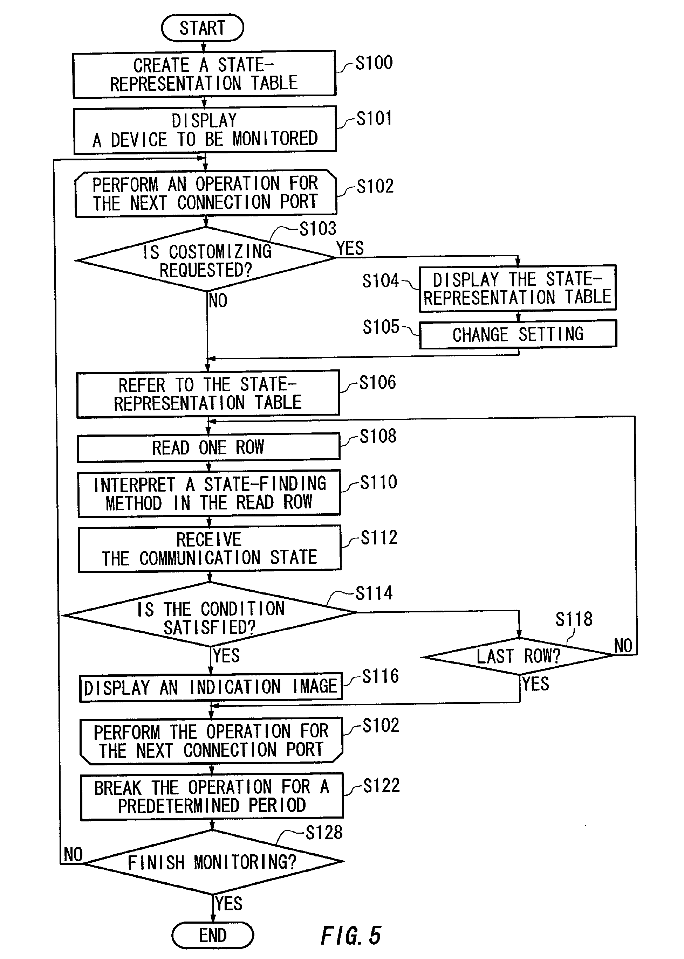

Fig. 5 is a flowchart of a network monitoring method according to the present embodiment. First, the display unit 110 displays the state-representation table (shown in Fig. 3) of the connection ports of the interconnecting unit that are to be monitored. When the network administrator inputs conditions in the state-representation table displayed on the display unit 110, the setting unit 104 re-creates the state-representation table suitable for the purpose of monitoring based on the conditions input by the network administrator (Step S100). The storing unit 106 stores the state-representation table created in Step S100 therein. The display unit 110 then displays the default of the interconnecting unit to be monitored (Step S101).

Next, a displaying operation from Steps S103 to S118 is performed for each of the connection ports of the interconnecting unit to be monitored (Step S102). First, it is determined whether or not a request for changing the setting in the state-representation table is accepted (Step S103). In a case where the request for changing the setting in the state-representation table is accepted, the display unit 110 displays the state-representation table shown in Fig . 3 (Step S104). The network administrator then inputs a new condition in the displayed state-representation table through the input unit 102, and the setting unit 104 changes the setting in the state-representation table based on the input condition (Step S105). The comparing unit 108 refers to the state-representation table after being changed for each of the connection ports (Step S106). In a case where the request for changing the setting in the state-representation table is not accepted in Step S103, the comparing unit 108 refers to the state-representation table stored in the storing unit 106 for each of the connection ports (Step S106).

The comparing unit 108 reads the state-representation table for the connection port that is referred to in an order coincident with the evaluation order (see Fig. 3) one by one. The comparing unit 108 then interprets the state-finding method in the read row of the state-representation table so as to find information to be received (Step S110). The receiving unit 100 receives information showing the communication state of the connection port of the interconnecting unit to be monitored based on the interpretation of the state field and the state finding method field (Step S112). In an alternative embodiment, the interconnecting unit to be monitored may transmit the information indicative of the communication state of the connection port with regular intervals while the receiving unit 100 may receive the information transmitted from the interconnecting unit to be monitored. Subsequently, the comparing unit 108 compares the information indicative of the communication state of the connection port received from the interconnecting unit with the determination condition shown in the state finding method filed (Step S114).

In a case where the comparing unit 108 determines in Step S114 that the determination condition is satisfied, the display unit 110 presents the indication image set in the state-representation table at the portion for the corresponding connection port in the image representing the interconnecting unit (Step S116). Then, for the next connection port the display operation is performed. In a case where the comparing unit 108 does not determine in Step S114 that the determination condition is satisfied, the comparing unit 108 then determines whether or not the row of the state-representation table read in Step S108 is the last row of the state-representation table for the corresponding connection port (Step S118).

In Step S118, when the comparing unit 108 determines that the row read in Step S108 is the last row, the indication image is not displayed at the portion for the corresponding connection port in the image representing the interconnecting unit, and the display operation for the next connection port is started. On the other hand, when the comparing unit 108 does not determine that the row read in Step S108 is the last row, the flow goes back to Step S108 so as to read a row having the next evaluation order of the state-representation table for the corresponding connection port, thereby the aforementioned operation is performed again. Please note that the comparing unit 108 does not determine that the determination condition is satisfied in Step S114 in a case where "not monitored" is set in the state finding method field. Moreover, the displaying operation (Step S102) may be performed in parallel for a plurality of connection ports.

After the displaying operation (Step S102) is finished for all the connection ports of the interconnecting unit to be monitored, the monitoring operation is interrupted at a predetermined period (Step S122). Then, it is determined whether or not the monitoring operation for the interconnecting unit is finished (Step S128). In a case where it is not determined that the monitoring operation is finished in Step S128, the flow goes back to Step S102, thereby the aforementioned operation is performed again. On the other hand, in a case where it is determined that the monitoring operation is finished in Step S128, the monitoring operation in the present embodiment is finished.

As described above, according to the network monitoring apparatus of the present embodiment, a user interface having a plurality of grades including, for example, a grade which makes the network administrator use the predetermined monitoring method; a grade allowing the indication image and the monitoring method to be customized; and a grade allowing a necessary state to be newly defined, depending on the knowledge and experience of the network administrator. Thus, it is possible to perform the monitoring operation in accordance with the needs of the network administrator.

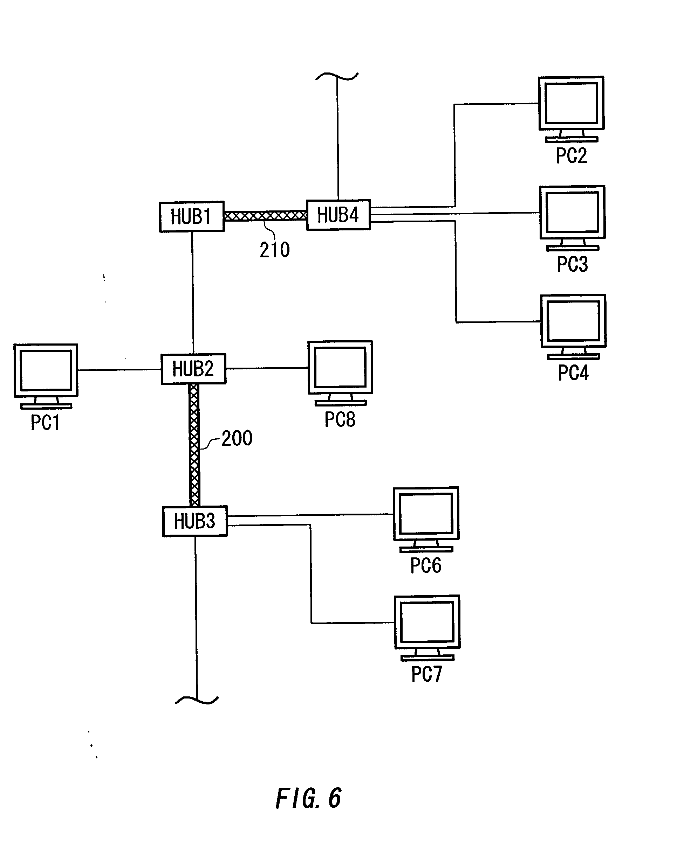

Fig. 6 shows another exemplary display for showing the states created by the display unit 110. The display unit 110 may display the whole network, and may also display the amount of communication in the network based on the information from the connection port of the interconnecting unit. In the example shown in Fig. 6, the network monitoring apparatus 10 may perform the operations described with reference to Figs. 2-5 for the amount of communication in the network. The display unit 110 may display images representing a plurality of network communication devices connected to the network and images representing lines each connecting one network communication device to the other, while displaying states of connections in the network. Moreover, the display unit 110 may display the states of communication including the information regarding the communication amount for each of the lines connecting the network communication devices. Furthermore, the network administrator may set the indication image so as to correspond to the communication amount, while the display unit 110 may display the set indication image. In this case, for example, the display unit 110 may display a line 200 or 210 having the communication amount more than a predetermined communication amount, as shown in Fig. 6.

According to the network monitoring apparatus 10 of the present embodiment, the communication amount in the network can be displayed by means of the indication images based on the setting by the network administrator. Thus, the network administrator can easily monitor how crowded the network is. In an alternative embodiment, the network monitoring apparatus 10 may monitor an operation state of a CD drive of a personal computer, an access unit such as a repeater or a hub, a load balancing device, a bandwidth management device, a media converter, an optical line terminal multiplexer or a power-supply management device that is connected to the network, as the state of the network, and may display the operation state thereof by using an indication image set by the network administrator for showing the operation state.

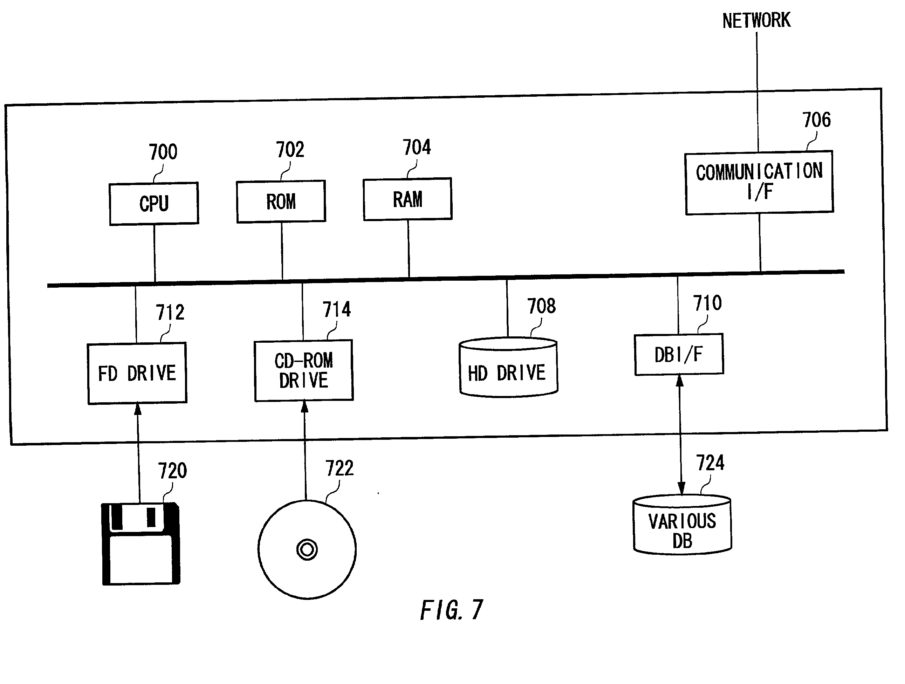

Fig. 7 shows an exemplary hardware configuration of the network monitoring apparatus 10. The network monitoring apparatus 10 includes a CPU 700, a ROM 702, a RAM 704, a communication interface 706, a hard disk drive 708, a database interface 710, a floppy disk drive 712 and a CD-ROM drive 714. The CPU 700 operates based on at least one program stored in the ROM 702 and RAM 704. The communication interface 706 allows the communication with another network communication device through the network. The database interface 710 writes data into a database and updates the contents of the database. The hard disk drive 708, that is an example of a storage device, stores setting information and a program for the operation of the CPU 700.

The floppy disk drive 712 reads data or a program from a floppy disk 720 to provide the read data or program to the CPU 700. The CD-ROM drive 714 reads data or a program from a CD-ROM 722 to provide the read data or program to the CPU 700. The communication interface 706 can be connected to the network communication device so as to perform data transmission and data receiving. The database interface 710 can be connected to the various databases 724 so as to perform data transmission and data receiving.

Software executed by the CPU 700 is provided to a user while being stored in a recording medium such as the floppy disk 720 or the CD-ROM 722. The software stored in the recording medium may be compressed or non-compressed. The software is installed from the recording medium into the hard disk drive 708, and is then read into the RAM 704 so that the CPU 700 executes the software.

The software provided while being stored in the recording medium, that is the software to be installed into the hard disk drive 708, functionally includes an input module, a setting module, a receiving module, a comparing module, a display module and a storing module. Operations that are to be executed by the CPU 700 in accordance with instructions of the respective module to the computer are the same as the functions and operations of the corresponding components in the network monitoring apparatus 10 of the present invention, respectively, and therefore the description thereof is omitted.

A part or all of the functions and operations of the network monitoring apparatus 10 according to all the embodiments described in the present application can be stored on the floppy disk 720 or the CD-ROM 722 shown in Fig. 7 as an example of the recording medium.

These programs may be read directly into the RAM from the recording medium, or read into the RAM after being installed into the hard disk drive from the recording medium. Moreover, the above-mentioned programs maybe stored in a single recording medium or a plurality of recording media. Furthermore, the programs may be stored while being encoded.

As the recording medium, other than the floppy disk and the CD-ROM, an optical recording medium such as a DVD or a PD, a magneto-optical recording medium such as an MD, a tape-like medium, a magnetic recording medium, or a semiconductor memory such as an IC card or a miniature card can be used. Moreover, a storage device such as a hard disk or a RAM provided in a server system connected to an exclusive communication network or the Internet may be used as the recording medium, so that the program can be provided to the network monitoring apparatus 10 through the communication network or the Internet. Such a recording medium is used only for manufacturing the network monitoring apparatus 10 and it is therefore apparent that manufacturing or selling such a recording medium as business can constitute infringement of the right based on the present application.

As is apparent from the above description, according to the network monitoring apparatus 10 of the present invention, the information regarding the network can be displayed based on the condition set by the network administrator.

Although the present invention has been described by way of exemplary embodiments, it should be understood that those skilled in the art might make many changes and substitutions without departing from the spirit and the scope of the present invention which is defined only by the appended claims.

## Claims

1. A network monitoring apparatus for displaying a state of a network and monitoring said network, comprising: a receiving unit operable to receive information of said network; and a display unit operable to display said information of said network, **CHARACTERIZED IN THAT** the network monitoring apparatus further comprises:
a setting unit operable to set a display condition that defines information to be displayed;
a comparing unit operable to compare said received information with said display condition; and wherein
said display unit displays said information of said network based on a result of the comparison by said comparing unit.

2. A network monitoring apparatus as claimed in claim 1, **CHARACTERIZED IN THAT** said setting unit further sets a receiving condition that defines information to be received, and
said receiving unit receives said information of said network based on said receiving condition.

3. A network monitoring apparatus as claimed in claim 1, **CHARACTERIZED IN THAT** said setting unit further sets an indication image corresponding to said display condition, and
said display unit displays said information of said network based on said indication image.

4. A network monitoring apparatus as claimed in claim 3, **CHARACTERIZED IN THAT** said receiving unit receives a communication state of an interconnecting unit that interconnects communication devices in said network from said interconnecting unit,
said comparing unit compares said communication state of said interconnecting unit with said display condition, and
said display unit displays said communication state of said interconnecting unit based on said comparison result.

5. A network monitoring apparatus as claimed in claim 4, **CHARACTERIZED IN THAT** said interconnecting unit includes a plurality of connection ports,
said receiving unit receives communication states of said plurality of connection ports from said interconnecting unit as said information of said network,
said comparing unit compares said communication states of said plurality of connection ports with said display condition, and
said display unit displays said communication states of said plurality of connection ports based on said comparison result.

6. A network monitoring apparatus as claimed in claim 3, **CHARACTERIZED IN THAT** said receiving unit receives the amount of communication at a connection port of said interconnecting unit from said interconnecting unit as said information of said network,
said comparing unit compares said communication amount at said connection port with said display condition, and
said display unit displays a communication state of said network based on said comparison result.

7. A network monitoring program for allowing a state of a network to be displayed and allowing said network to be monitored, comprising: a receiving module operable to receive information of said network; and a display module operable to display said information of said network, **CHARACTERIZED IN THAT** the network monitoring program further comprises:
a setting module operable to set a display condition that defines information to be displayed;
a comparing module operable to compare said information received with said display condition; and wherein said display module displays said information of said network based on a result of the comparison by said comparing module.

8. A network monitoring program as claimed in claim 7, **CHARACTERIZED IN THAT** said setting module further sets a receiving condition that defines information to be received, and
said receiving module receives said information of said network based on said receiving condition.

9. A network monitoring program as claimed in claim 7, **CHARACTERIZED IN THAT** said setting module further sets an indication image corresponding to said display condition, and
said display module displays said information of said network based on said indication image.

10. A network monitoring program as claimed in claim 9, **CHARACTERIZED IN THAT** said receiving module receives a communication state of an interconnecting unit for interconnecting communication devices in said network,
said comparing module compares said communication state of said interconnecting unit with said display condition, and
said display module displays said communication state of said interconnecting unit based on said comparison result.

11. A network monitoring program as claimed in claim 10, **CHARACTERIZED IN THAT** said interconnecting unit includes a plurality of connection ports,
said receiving modules receives communication states of said plurality of connection ports as said information of said network,
said comparing module compares said communication states of said plurality of connection ports with said display condition, and
said display module displays said communication states of said plurality of connection ports based on said comparison result.

12. A network monitoring program as claimed in claim 9, **CHARACTERIZED IN THAT** said receiving module receives the amount of communication at a connection port of said interconnecting unit from said interconnecting unit as said information of said network,
said comparing module compares said communication amount at said connection port with said display condition, and
said display module displays a communication state of said network based on said comparison result.

13. A network monitoring method for displaying a state of a network and monitoring said network, comprising: receiving information of said network; and displaying said information of said network, **CHARACTERIZED IN THAT** the network monitoring method further comprises:
setting a display condition that defines information to be displayed;
comparing said received information of said network with said display condition; and wherein
said displaying displays said information of said network based on a result of the comparison.

14. A network monitoring method as claimed in claim 13, **CHARACTERIZED IN THAT** in said setting a receiving condition that defines information to be received is further set, and
in said receiving said information of said network is received based on said receiving condition.

15. A network monitoring method as claimed in claim 13, **CHARACTERIZED IN THAT** in said setting an indication image is further set to correspond to said display condition, and
in said displaying said information of said network is displayed based on said indication image.

16. A computer network system comprising: a network monitoring apparatus operable to display a state of a network and to monitor said network; and a network communication device operable to notify said network monitoring apparatus of said state of said network, said network monitoring apparatus including: a receiving unit operable to receive information of said network from said network communication device; and a display unit operable to display said information of said network, **CHARACTERIZED IN THAT** said network monitoring apparatus further includes:
a setting unit operable to set a display condition that defines information to be displayed;
a comparing unit operable to compare said received information with said display condition; and wherein said display unit displays said information of said network based on a result of the comparison by said comparing unit.

17. A computer network systemas claimed in claim 16, **CHARACTERIZED IN THAT** said setting unit further sets a receiving condition that defines information to be received, and
said receiving unit receives said information of saidnetwork based on said receiving condition.

18. A computer network systemas claimed in claim 16, **CHARACTERIZED IN THAT** said setting unit further sets an indication image corresponding to said display condition, and
said display unit displays said information of said network based on said indication image.

19. A computer network systemas claimed in claim 18, **CHARACTERIZED IN THAT** said network communication device is an interconnecting unit for interconnecting communication devices in said network,
said receiving unit receives a communication state of said interconnecting unit from said interconnecting unit,
said comparing unit compares said communication state of said interconnecting unit with said display condition, and
said display unit displays said communication state of said interconnecting unit based on said comparison result.

20. A computer network system as claimed in claim 19, **CHARACTERIZED IN THAT** said interconnecting unit includes a plurality of connection ports,
said receiving unit receives communication states of said plurality of connection ports of said interconnecting unit,
said comparing unit compares said communication states of said plurality of connection ports with said display condition, and
said display unit displays said communication states of said plurality of connection ports based on said comparison result.

21. A computer network systemas claimed in claim 18, **CHARACTERIZED IN THAT** said receiving unit receives the amount of communication at a connection port of said interconnecting unit from said interconnecting unit,
said comparing unit compares said communication amount at said connection port with said display condition, and
said display unit displays a communication state of said network based on said comparison result.
